# FASCICULE DE BREVET EUROPEEN

(11) **EP 0 742 914 B1**
(45) Date de publication et mention de la délivrance du brevet: **29.04.1998**
(21) Numéro de dépôt: 95908986.3
(22) Date de dépôt: 03.02.1995
(51) Int. Cl.: G02F 1/1335

(54) **DISPOSITIF ET PROCEDES DE FABRICATION ET DE REPARATION DE FILTRES COLORES**
VORRICHTUNG UND VERFAHREN ZUR HERSTELLUNG UND REPARATUR VON FARBFILTERN
DEVICE AND METHODS FOR PRODUCING AND REPAIRING COLOUR FILTERS

(30) Priorité: 04.02.1994 FR 9401283
(43) Date de publication de la demande: 20.11.1996
(73) Titulaire: TOXOT SCIENCE & APPLICATIONS, F-26501 Bourg-Lès-Valence Cédex (FR)
(72) Inventeur: DUNAND, Alain, F-26000 Valence (FR)
(74) Mandataire: Des Termes, Monique
(86) Numéro de dépôt international: FR9500137
(87) Numéro de publication internationale: WO9521400

(56) Documents cités:
- FR-A- 2 689 813
- PATENT ABSTRACTS OF JAPAN vol. 13, no. 37 (P-819) 27 Janvier 1989 & JP,A,63 235 901 (FUJITSU LTD) 30 Septembre 1988
- PATENT ABSTRACTS OF JAPAN vol. 13, no. 125 (P-847) 28 Mars 1989 & JP,A,63 294 503 (FUJITSU LTD) 1 Décembre 1988
- DATABASE WPI Week 9340, Derwent Publications Ltd., London, GB; AN 93-314365 & JP,A,5 224 007 (TORAY IND INC) 3 Septembre 1993
- PATENT ABSTRACTS OF JAPAN vol. 17, no. 703 (P-1666) 22 Décembre 1993 & JP,A,05 241 012 (TORAY IND INC) 21 Septembre 1993
- DATABASE WPI Week 9328, Derwent Publications Ltd., London, GB; AN 93-221334 & JP,A,5 142 413 (TORAY IND INC) 11 Juin 1993

## Description

La présente invention concerne un dispositif, un procédé de fabrication et un procédé de réparation de filtres colorés utilisés dans les dispositifs électroniques d'acquisition d'images couleurs, tels que les caméras électroniques, ou dans les dispositifs de visualisation directe sur écran. Un filtre coloré est un composant caractéristique d'un écran couleur : t'est le panneau transparent, réalisé à partir d'un substrat en verre, qui constitue la face avant de l'écran et sur lequel est disposé un réseau régulier de pavés colorés contribuant à créer la couleur par effet de filtre optique.

Les dispositifs électroniques de manipulation d'images couleurs connaissent actuellement un développement important, grâce notamment à l'évolution rapide des technologies de visualisation. Ainsi, la technologie du tube cathodique, basée sur une technique d'émission de lumière pour laquelle la restitution des images s'effectue grâce à un balayage approprié de l'écran par un faisceau d'électrons, dévié à cadence élevée afin que les pixels sélectivement excités reproduisent fidèlement les images à transmettre, reste très employée dans les téléviseurs et les écrans d'ordinateur de bureau, mais est peu adaptée aux dispositifs portables ou de faible encombrement. En effet, la déviation d'un seul faisceau d'électrons sur des amplitudes importantes -la diagonale de l'écran- impose un encombrement du tube cathodique incompatible avec les ordinateurs portables, avec les téléviseurs à grand format, comme avec les instrumentations ou les tableaux de bord automobiles par exemple.

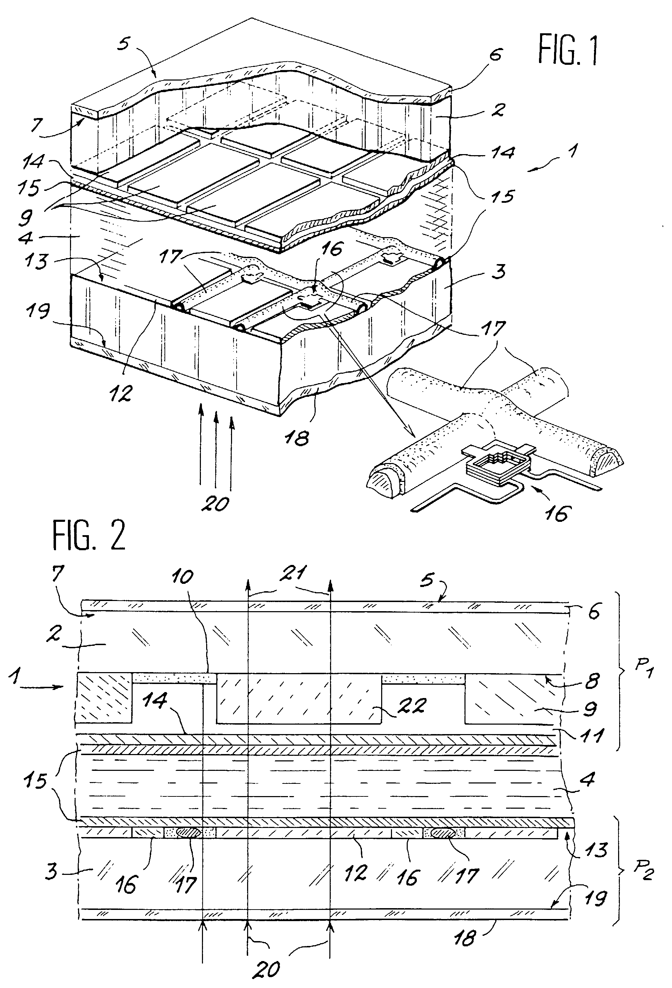

Pour résoudre cet inconvénient, la technologie des panneaux à cristaux liquides (Liquid Crystal Display : LCD) permet de réaliser des écrans couleurs beaucoup plus compacts. La figure 1 est une vue éclatée et la figure 2 est une vue en coupe transversale d'un exemple particulier de réalisation d'un écran couleur 1 à matrice active de la technologie des cristaux liquides. Cet écran 1 résulte de l'assemblage de panneaux, avant P₁ et arrière P₂, séparés de quelques fractions de microns à quelques microns (0,6 µm à 10 µm) selon la technologie des cristaux liquides, et scellés à haute température. Le panneau avant P₁ est élaboré à partir d'une plaque ou substrat 2, en verre généralement, dont une première face 7, correspondant à la face avant de l'écran en regard de l'observateur, est recouverte d'une couche 6 de polarisation optique constituée d'un matériau aux caractéristiques anisotropes. Sur la seconde face 8 du substrat 2, opposée à la première face 7, est déposée une fine couche de matériaux colorés et transparents constituant des pavés 9 ou subpixels de trois couleurs par exemple, qui peuvent être en particulier, rouge, vert et bleu, et dont l'ensemble constitue un filtre coloré. Ces pavés sont organisés selon des géométries particulières pour réaliser des filtres colorés, en mosaïque pour les applications de télévision ou en ligne pour les ordinateurs de bureau par exemple, et dont le spectre de transmission correspond à des caractéristiques précises. Dans ces systèmes de visualisation d'images, les pavés sont généralement séparés par une grille sombre 10, appelée "black matrix", qui est généralement réalisée par dépôt d'oxydes métalliques et qui est destinée à la fois à augmenter le contraste de l'écran et à masquer les éléments fonctionnels non transparents de l'écran comme les transistors de commande, ou les interférences de couleurs entre les pavés.

L'espace entre les deux panneaux avant P₁ et arrière P₂ est rempli par du cristal liquide. Pour assurer une épaisseur constante de la couche 4 de cristaux liquides ainsi formée, les pavés colorés 9 sont recouverts d'une couche transparente 11 de planarisation, qui sert également de barrière et de passivation vis-à-vis du cristal liquide. L'affichage de chaque pavé est obtenu par un champ électrique qui aligne les cristaux selon sa direction et qui est créé par application d'une tension électrique entre une électrode de commande transparente 12 du pavé située sur la face 13 de la plaque de verre 3 du panneau arrière P₂ de l'écran, en regard de la couche 4 de cristal liquide et une contre-électrode 14 parfaitement transparente située en regard de ladite couche 4 de cristal liquide, sur la couche de planarisation 11. C'est pourquoi cette dernière doit être parfaitement plane et présenter, de plus, des propriétés diélectriques adaptées.

La couche 4 de cristal liquide est en contact, sur chacune de ses deux faces, avec une couche 15 d'alignement, de très faible épaisseur, préalablement traitée, destinée à orienter les molécules de cristal liquide directement à son contact. Entre la couche 15 d'alignement et la plaque 3 de verre servant à élaborer le panneau arrière de l'écran, sont disposées les électrodes 12 transparentes de commande de l'affichage des pavés, les transistors de commande 16 TFT non transparents ainsi que les électrodes 17 de lignes et colonnes également non transparentes. Les transistors et les électrodes de lignes sont placés derrière la grille sombre 10 qui les cache puisqu'ils ne sont pas transparents.

De même que la face 7 du panneau P₁ correspondant à l'avant de l'écran est recouverte d'une couche de polarisation 6, de même la face 19 du panneau arrière P₂, correspondant à la face arrière de l'écran, est recouverte d'un polariseur ou couche de polarisation 18. Ainsi, un éclairage 20 constant dans le temps, uniforme, placé sur la surface arrière de l'écran et de couleur blanche émet vers le cristal liquide 4 une lumière polarisée grâce au filtre polariseur 18 placé sur la face extérieure 19 du panneau arrière P₂. Selon les états de commande d'une matrice de transistors 16, jouant le rôle de commutateurs de tension des électrodes 12 disposées au niveau de chaque pavé coloré de l'écran et dont le fonctionnement exploite les propriétés optiques biréfringentes des cristaux liquides, la lumière parvient ou non à l'oeil de l'observateur. Ainsi l'observateur voit une lumière rouge 21 sur la face extérieur avant 5 de l'écran à l'endroit d'un pavé 22 coloré en rouge, lorsque le transistor de commande 16 aura agit sur la transmission de l'épaisseur du cristal liquide en regard de l'électrode de commande 12. Un tel écran à cristaux liquides fonctionne en transmission optique de la lumière avec la couleur rouge, verte ou bleue au niveau du pavé selon la couleur du filtre déposé à cet endroit.

Parmi les techniques actuelles de fabrication des filtres colorés, il existe la photolithographie qui met en oeuvre la fabrication de masques optiques, le dépôt de couches de résines, l'insolation de résines photosensibles, les attaques chimiques et les nettoyages successifs et parfois des phases de réticulation des résines par effet photochimique ou thermique.

Pour les filtres colorés eux-mêmes, on peut utiliser de la gélatine uniformément déposée sur du verre et recouverte de résine photosensible qui est ensuite impressionnée puis dissoute chimiquement pour ne laisser apparents que les pavés d'une même couleur, dans lesquels est alors diffusé puis fixé un colorant avant enlèvement du masque en résine photosensible.

On répète cette opération pour chaque couleur. Les inconvénients de cette technique sont le nombré important d'étapes, les traces laissées sur la surface du filtre coloré et les fluctuations dans la diffusion des colorants.

On peut également utiliser des résines préalablement colorées, telles que les polyimides ou la benzocyclobutène (BCB), ou des résines colorées photo-imageables, mais dans tous les cas la mise au point des différentes étapes reste très délicate.

L'électrodéposition est une autre technique actuelle exploitant une organisation des électrodes et des filtres colorés de l'écran par ligne qui permet de polariser les électrodes en regard de chacune des couleurs indépendamment. Pour déposer chacune des couleurs, le substrat, comportant des électrodes organisées en lignes, est plongé dans un bain électrolytique contenant un mélange de polymère et de colorant et la mise sous tension des électrodes en regard de la couleur du bain créée, par diminution du PH au niveau des électrodes, une précipitation locale du polymère qui fixe simultanément le colorant sur l'électrode. Une cuisson supplémentaire fixe définitivement le filtre coloré.

Si cette technique permet de réaliser des filtres de grandes dimensions, elle est cependant longue, environ vingt minutes par étape, avec un nombre élevé d'étapes, et est difficilement reproductible avec précision. Elle est également limitée à la configuration des pavés en ligne.

Un troisième type de technique concerne l'impression par contact à rouleaux, telle que l'impression offset, l'impression par rouleau gravé ou héliogravure et l'impression flexogravure. Elles servent plus particulièrement pour les motifs en lignes, et non en mosaïques, et les résolutions peu fines. Les inconvénients proviennent des difficultés à obtenir une homogénéité de l'encrage déposé selon l'axe des rouleaux et une homogénéité de l'épaisseur déposée au niveau de chaque ligne.

Ces techniques de l'art antérieur présentent de nombreux inconvénients dont en particulier la création d'un nombre important de défauts, soit ponctuels (trous) soit liés à des inhomogénéités à l'échelle de l'écran, générés notamment par le fait que chaque couleur subit les effets du procédé de dépôt des autres couleurs et que la fabrication des filtres nécessite un grand nombre d'étapes. Un autre inconvénient réside dans l'impossibilité de contrôler la fabrication de l'écran pendant les phases de dépôt et de réparer les défauts. Or, chaque pavé coloré constituant les filtres de l'écran doit être sans défaut, de sorte que les rendements actuels de fabrication de ces filtres sont compris entre 10 et 50 %, et peuvent être encore plus faibles quand la taille des écrans augmente. Cela entraîne un autre inconvénient qui est le coût de fabrication très élevé, car les matériaux mis en oeuvre sont très coûteux et gaspillés en raison des procédés de dépôt. Enfin, un autre inconvénient très important tient au fait qu'aucune technique actuelle ne permet de réaliser des filtres colorés de grande dimension, voisine d'un mètre, sans limitation de principe ou nécessité d'investissements importants.

C'est pourquoi le but de l'invention est de remédier à ces inconvénients précités en utilisant la technique d'impression par jet d'encre continu, haute résolution, dans un dispositif de fabrication et de réparation de filtres colorés.

Pour cela, un premier objet de l'invention est un dispositif de fabrication et de réparation de filtres colorés à partir d'un substrat sur lequel est déposé un réseau régulier de pavés colorés contribuant à modifier la couleur par effet de filtre optique, caractérisé en ce qu'il comporte :
- une table de grande stabilité mécanique, sur laquelle est placé le substrat,
- une tête d'impression par jet continu d'encre haute résolution comportant plusieurs modules d'impression à une ou plusieurs buses d'éjection d'encre,
- un circuit d'alimentation en encre(s) de ladite tête d'impression,
- un dispositif mécanique motorisé de déplacement relatif du substrat par rapport à la tête d'impression, de très haute précision,
- un dispositif de mesure de la position de la table selon deux directions X et Y perpendiculaires entre elles, et sensiblement perpendiculaires à la direction Z des gouttes projetées par la tête d'impression, par interférométrie laser ou codeur optique,
- un système de positionnement à optique microscopique dont la position relative à la tête d'impression selon les deux directions X et Y est fixe, destiné à positionner les impacts des gouttes émises par la tête d'impression par rapport à des repères optiques présents sur le substrat,
- un système de contrôle et de commande de l'ensemble du dispositif.

Par "dispositif de déplacement de très haute précision", on entend un dispositif de déplacement avec des tolérances de positionnement, rectitude, tangage et roulis, de l'ordre de 1 micromètre ou moins.

L'impression par jet d'encre continu haute résolution englobe :
- la technique du jet d'encre continu dévié haute résolution, décrite dans les demandes de brevet français n°8814073 du 18 octobre 1989 et n°9108482 du 5 juillet 1991 et le brevet US-A-5,049,899 auxquels on se reportera, et
- la technique du jet d'encre continu binaire haute résolution, décrite dans les brevets US-A-4,620,196 et US-A-4,901,088 auxquels on se reportera.

Un autre objet de l'invention est un procédé de fabrication de filtres colorés mettant en oeuvre un dispositif de fabrication, premier objet de l'invention, caractérisé en ce qu'il comporte les étapes suivantes :
- mémorisation des informations de position, de forme et de couleur concernant les pavés par le système de contrôle puis par les cartes électroniques affectées à chaque module d'impression de la tète d'impression,
- mise en place du substrat du filtre, comprenant des repères optiques de positionnement, sur la table en-dessous de la tète d'impression,
- impression des motifs géométriques tests par la tête d'impression sur le substrat,
- lecture des positions respectives des repères de positionnement d'une part, et des motifs tests d'autre part, par le système de positionnement à optique microscopique,
- analyse, par le système de contrôle, des écarts de position entre les repères de positionnement et les motifs tests, et commande du positionnement des impacts de gouttes sur le substrat,
- impression à la volée de chaque pavé sur le substrat selon un algorithme de déplacement relatif entre le substrat et la tête d'impression.

Un troisième objet de l'invention est un procédé de réparation de filtres colorés mettant en oeuvre un dispositif selon l'invention, tel que décrit dans la revendication 21.

D'autres caractéristiques et avantages de l'invention apparaîtront à la lecture de la description des exemples de réalisation représentés par les figures suivantes qui sont, outre les figures 1 et 2 déjà décrites :
- la figure 3 : une vue schématique en perspective du dispositif de fabrication selon l'invention,
- la figure 4 : une vue schématique de côté du même dispositif,
- les figures 5a à 5d : les étapes du procédé de fabrication de filtres colorés selon l'invention,
- les figures 6a à 6c : des exemples particuliers de directions d'impression des pavés selon le procédé de fabrication de filtres colorés, selon l'invention.

Les filtres colorés réalisés ou réparés par la technique du jet d'encre, par le dispositif et selon les procédés de l'invention, doivent répondre aux contraintes technologiques suivantes :
- le matériau coloré doit avoir une caractéristique de transmission optique adaptée,
- les pavés doivent avoir une taille et une épaisseur uniformes,
- les pavés doivent présenter une stabilité importante à l'humidité, à la lumière et à la température car le scellement de l'écran s'effectue aux environs de 150 à 200°C,
- les filtres doivent être très résistants mécaniquement afin de n'être pas détériorés par les manipulations ultérieures liées à la fabrication de l'écran,
- ils doivent être exempts de particules de poussière, de défauts ponctuels ("pinholes") et de rayures,
- la face extérieure en regard de l'observateur doit être aussi plane et lisse que possible.

Quant à la technique même de l'impression par jet d'encre continu haute résolution, qu'il soit dévié ou binaire, elle doit répondre à trois contraintes principales.

Tout d'abord, les traits obtenus par dépôt de jet d'encre doivent être très fins, car les pavés des filtres colorés ont de 80 à 300 microns de côté. Or, la taille des impacts réalisables par la technique du jet d'encre haute résolution est de l'ordre de 20 à 40 microns donc tout à fait compatible.

De plus, les écrans couleurs doivent être produits selon des volumes importants, ce qui implique des cadences d'impression élevées. Or la fréquence de formation de gouttes par les technologies à jet d'encre continu est élevée, bien supérieure aux technologies goutte à la demande. De plus, chaque buse imprime une largeur de l'ordre de 100 à 400 microns compatible avec les contraintes de fabrication de tète d'impression multijet qui seule permet de réaliser une production de milliers d'écrans par jour.

Enfin, la fabrication et les applications des filtres colorés conduisent à formuler des encres de bonne qualité coloristique, résistant aux fortes températures lors du scellement de l'écran et compatibles avec le contact des autres matériaux (ITO, cristal liquide) ainsi qu'avec leur procédé de dépôt. Pour ces raisons, dans les imprimantes à jet continu dévié haute résolution, les encres doivent être constituées d'une certaine proportion de pigments colorés résistant en température dans des colorants, de résines réticulables et de solvants de natures variées, compatibles avec le fonctionnement des imprimantes à jet d'encre à résolution élevée. Or, la technique du jet d'encre continu dévié haute résolution utilise les buses de gros diamètre (de 30 à 50 microns pour l'application aux filtres colorés selon l'invention), ce qui permet d'utiliser des gammes d'encre variées, même à forte proportion de pigments, sans risque de colmatage.

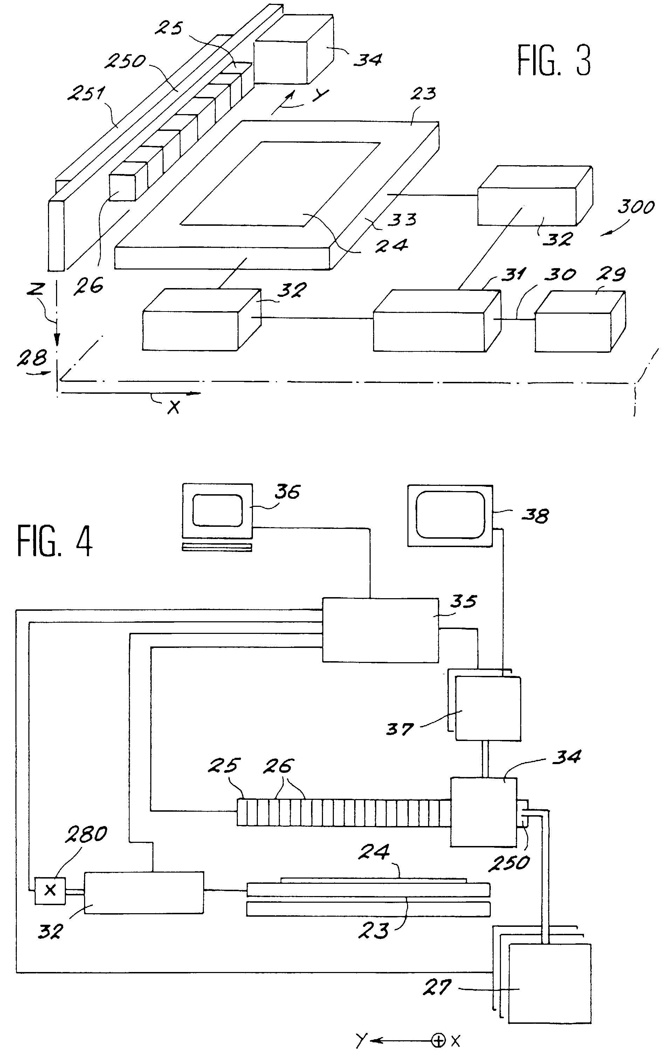

Selon l'invention, le dispositif de fabrication de filtres colorés constitués d'un réseau de pavés colorés déposés sur un substrat pour réaliser la face avant d'un écran couleur est représenté schématiquement en perspective par la figure 3 et de côté par la figure 4.

Dans la description suivante, le support du filtre coloré peut être typiquement un verre, par exemple borosilicate, préalablement traité chimiquement pour favoriser l'adhésion de l'encre, selon un exemple non limitatif.

Le dispositif de fabrication comporte une table 23 de grande stabilité mécanique, supportant le substrat de verre 24 du filtre coloré à réaliser. Cette table peut être montée sur un amortisseur pneumatique par exemple. Une tête d'impression 25, comportant un ou plusieurs modules d'impression 26 dotés d'une ou plusieurs buses d'éjection de gouttes de très haute précision suivant une direction Z perpendiculaire au plan du substrat 24, est fixée à un support mécanique 250 et placée au-dessus de la table 23. Elle est alimentée par des encres qui peuvent être de plusieurs couleurs. Chaque encre, correspondant à une couleur donnée, est envoyée sous pression par un circuit d'encre 27 à l'ensemble des buses d'éjection qui lui sont associées. Ce circuit d'encre 27 assure de plus le recyclage des gouttes non utilisées, un maintien de la qualité de l'encre et un filtrage poussé. Cette tète d'impression 25 utilise la technique du jet continu dévié haute résolution ou la technique du jet continu binaire haute résolution.

Un dispositif 28 de déplacement relatif de la tête d'impression 25 par rapport au substrat 24 du filtre est prévu. Ce doit être un dispositif mécanique motorisé de très haute précision qui réalise préférentiellement le déplacement du substrat sous la tête d'impression. Ce dispositif peut être par exemple un système Carl ZEISS LM 100, qui comporte une structure en granit supportant la tête d'un microscope ou un pont Micro-Contrôle UP qui est une unité de déplacement suivant deux directions perpendiculaires X et Y, de grande précision et équipée d'un dispositif de guidage à coussin d'air glissant sur un statif en granit. D'après la figure 4, le déplacement de la table 23 est assuré par deux moteurs 280 suivant ces deux directions X et Y qui sont perpendiculaires à la direction Z.

Un dispositif 300 de mesure de la position de la table, selon les axes X et Y de déplacement relatif par rapport à la tête d'impression, permet de positionner avec une très grande précision le substrat 24 grâce à un asservissement des moteurs 280 qui assurent le déplacement de la table 23 selon lesdites directions X et Y. Ce dispositif peut être un codeur optique, ou bien peut utiliser l'interférométrie laser. Dans le dernier cas, un dispositif de mesure par interférométrie laser comprend un circuit 29 de génération d'un rayon laser 30 stabilisé aboutissant à un circuit séparateur 31 qui envoie le rayon laser vers deux interféromètres 32 placés à 90° l'un de l'autre en face de deux côtés orthogonaux de la table 23 dotés de miroirs 33 de mesure. Ce dispositif de mesure peut être un codeur linéaire incrément ILE400 de Micro-Contrôle.

Le dispositif selon l'invention incorpore de plus un système optique 34 servant à mesurer la position des impacts des gouttes d'encre émises par les différentes buses de la tête d' impression par rapport à des repères optiques présents sur le substrat à imprimer. Dans le cas d'un dispositif utilisant la technique du jet continu dévié, le positionnement des impacts de gouttes est réalisé par un asservissement des trajectoires des gouttes d'encre de chacune des buses sur leur tension de charge, jusqu'à ce que la position des impacts coïncide avec les repères de positionnement. Cette compensation électronique des trajectoires est très rapide et peut s'effectuer "à la volée", pendant les phases d'accélération et de décélération du substrat à chaque balayage. Ce système optique, dont la position par rapport à la tête d'impression. suivant les deux directions de déplacement X et Y est fixe, peut être un système à optique microscopique. Dans le cas d'un dispositif utilisant la technique du jet binaire, le positionnement des impacts de gouttes est réalisé par compensation de la position de la table sur laquelle est placé le substrat. Cette compensation peut être obtenue par un réglage mécanique de la position de chacun des jets disposés sur la poutre servant de support mécanique des têtes d'impression ou être réalisée au niveau de l'image électronique des points à imprimer.

Ce système optique 34 peut détecter la position des impacts de microgouttes et celle des repères de références en utilisant une méthode optique classique. Il comporte par exemple un microscope travaillant en lumière visible, doté d'un fort grossissement. La détection de position se fait par analyse de l'image et dépend des conditions d'illumination.

Le système optique 34 peut aussi utiliser la méthode du microscope à balayage laser, en lumière cohérente (laser) et focalisée. La détection de position est réalisée à partir de l'analyse de l'intensité et de la variation de phase de la lumière réfléchie par la surface du substrat et donc du film d'encre déposé. C'est une mesure du profil de la surface du substrat.

D'autres variantes sont possibles, exploitant des faisceaux lumineux, visibles ou non, cohérents ou non, dans des dimensions microscopiques.

Ces repères optiques peuvent correspondre à la grille sombre ("black matrix") du filtre coloré qui sert à délimiter les pavés colorés et qui aura été préalablement déposée sur le substrat par tout moyen, dont par jet d'encre grâce au dispositif selon l'invention. Ils peuvent aussi être des repères géométriques déposés par des moyens quelconques. Il serait particulièrement intéressant d'imprimer également une identification sur le substrat, sous forme de caractères alphanumériques par exemple, qui pourra avantageusement être exploitée pour le suivi informatisé de production, par exemple pour relier le substrat aux informations qui lui sont associées telles que l'image des filtres à déposer.

Enfin, le dispositif selon l'invention comporte un système de contrôle et de commande 35 de l'ensemble des éléments constituant le dispositif. Il assure le pilotage de la tête d'impression 25, la supervision des circuits d'encre 27, la synchronisation avec le dispositif 28 de déplacement relatif de la tête d'impression et du substrat, la communication avec le système optique de positionnement 34 ainsi que la gestion d'une interface 36 avec l'opérateur, matérialisé par un écran de contrôle et un clavier.

Selon une variante automatisée du dispositif selon l'invention, le système optique de positionnement 34 incorpore un réglage automatique de la distance focale grâce à un système laser autofocus 37 qui analyse l'image et en garantit la mise au point quelle que soit la partie visée du substrat. Dans ce cas, le système optique permet, d'une part, d'effectuer le positionnement, la relecture des codes d'identification, le test des filtres déposés par mesure de dimensions critiques, overlay, mesure d'épaisseur des pavés ou mesure des couleurs, et, d'autre part, la réparation des filtres jugés défectueux.

Selon une autre variante, le support mécanique 250 de la tête d'impression 25 permet également la fixation d'une tête d'impression multijet à résolution moyenne 251, de grande largeur, autorisant la couverture totale et uniforme du substrat en un nombre limité, voire un seul balayage du substrat. Une telle tête d'impression, décrite dans la demande de brevet français n° 92 04503 : "Dispositif d'impression grande largeur et procédé de contrôle de la qualité d'impression mis en oeuvre par le dispositif ", est utilisée pour déposer les couches de planarisation et/ou d'alignement, ce qui réduit le nombre d'étapes du procédé de fabrication du filtre coloré et améliore le rendement de la fabrication.

Selon une autre variante, le dispositif de fabrication peut comporter, de plus, un ou plusieurs systèmes de séchage ou de réticulation des résines. En fonction des matériaux utilisés pour les dépôts, ce peut être une plaque chauffante placée sous le substrat du filtre, ou un système émettant un flux énergétique vers le substrat -lampe à rayonnement ultra-violet, gaz inerte chaud- destinés à initialiser la réticulation de chaque couche d'encre, avant de passer aux couches suivantes ("prebake") ou de procéder à la réticulation finale, dans un four par exemple. L'ensemble des opérations de chargement et de déchargement des substrats sur la table, d'alignement des substrats, d'impression des filtres colorés, de réticulation, peut donc être automatisé, ce qui autorise, compte tenu de la compacité du dispositif de fabrication, sa mise en place dans une petite enceinte où l'atmosphère, la température et la propreté sont finement contrôlées et qui est reliée à l'extérieur par des sas. Ceci garantit un très bon rendement de fabrication des filtres colorés, pour un investissement de production modeste, ainsi qu'une utilisation optimale des fluides car sans perte de matière.

Un autre objet de l'invention est un procédé de fabrication de filtres colorés mettant en oeuvre un dispositif de fabrication tel qu'il vient d'être décrit. Selon ce procédé, l'ensemble des informations reliant la position, la forme des pavés et la couleur qui leur est destinée est connu au démarrage de la fabrication et doit être mémorisé par le système de contrôle dans une mémoire électronique, avant d'être téléchargé dans des cartes électroniques affectées à chaque module d'impression de la tête d'impression.

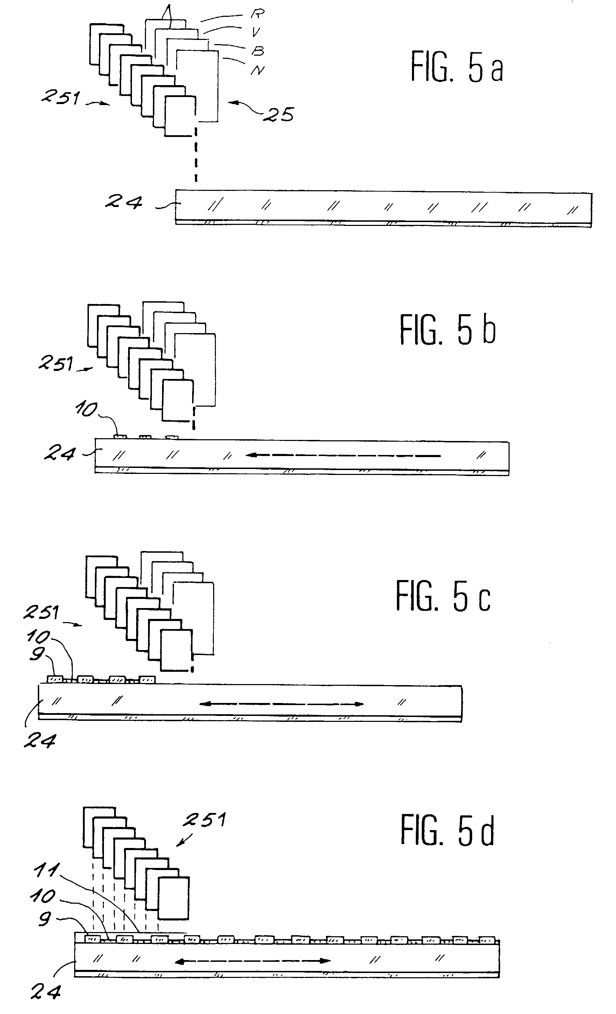

Puis le substrat 24, doté de repères optiques de positionnement, est déplacé sous la tête d'impression 25 qui imprime des motifs géométriques tests -figure 5a-. Le système à optique microscopique lit la position (Xo, Yo) des repères de positionnement d'une part et la position (Xi, Yi, i = 1 à n, n = nombre de buses) des motifs tests imprimés par les n buses.

Sur les figures 5a à 6c, les lettres R, V, B, N signifient respectivement rouge, vert, bleu, noir.

Les écarts de position entre ces repères de positionnement et ces motifs tests sont analysés par le système de contrôle, qui détermine alors, dans le cas de la technique du jet continu dévié, la compensation de tension de charge qui doit être effectuée pour chaque buse et asservit aussi la trajectoire des gouttes d'encre par action sur leurs tensions de charge, et dans le cas de la technique du jet binaire, la compensation de position du substrat.

A partir de là, l'étape d'impression peut commencer. Le substrat est déplacé en aller-retour sous la tête d'impression et chaque pavé est imprimé à la volée par les buses commandées électroniquement et dont la couleur d'encre correspond à celle du pavé -figure 5c-.

Selon les conditions de mouillabilité du substrat et la définition géométrique des pavés de l'écran, plusieurs algorithmes de déplacement relatif entre la tête d'impression et le substrat ainsi que plusieurs stratégies de dépôt des gouttes sont à envisager.

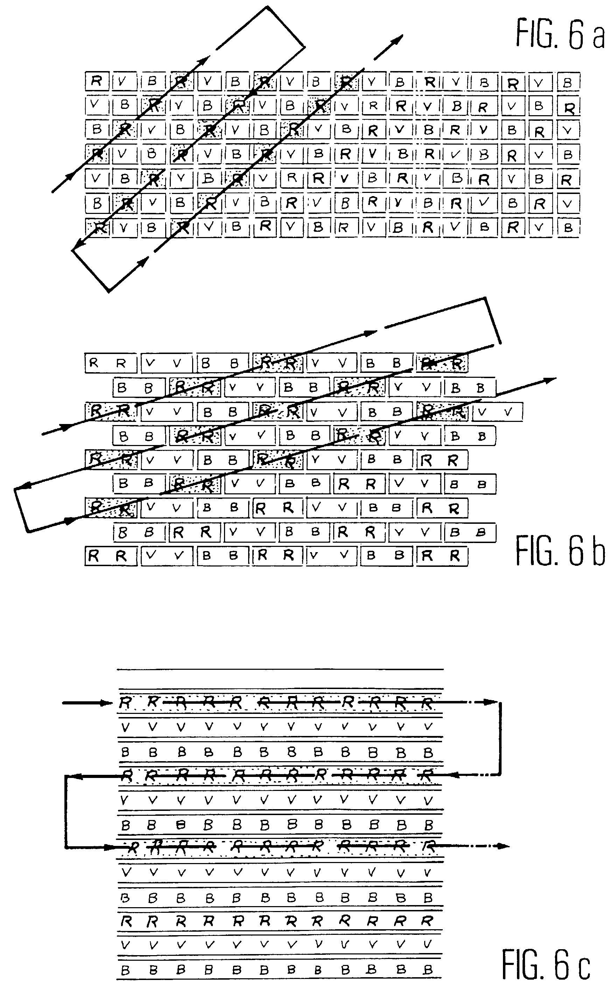

Concernant la géométrie de l'écran, le dispositif de fabrication pourra imprimer préférentiellement selon la direction qui aligne le plus grand nombre de pavés correspondant à une même couleur, afin de limiter le nombre de passes nécessaires de la tête d'impression sur le substrat. Cette direction est généralement la diagonale pour les motifs "mosaïque", comme le montrent les figures 6a et 6b, alors qu'elle est un des axes de symétrie du filtre pour les motifs en ligne, figure 6c Pour tenir compte des caractéristiques de l'étalement de l'encre, de la présence de la grille sombre ou "black matrix" et de la mouillabilité des pavés, la fabrication aura lieu en mode de déflexion unique et nombre de gouttes variables ou en mode trame. Dans le premier cas, chaque buse se place au-dessus du centre d'un pavé, émet un grand nombre de gouttes dans la même direction. Leurs impacts se superposent et s'étalent pour remplir le pavé défini par la grille. Le mode trame, par contre, conduit à imprimer par chaque buse des séquences de gouttes en nombre variable et sur des trajectoires différentes afin de couvrir uniformément toute la surface du pavé visé par la buse.

Selon la densité optique souhaitée pour les filtres colorés, et pour parvenir à une meilleure planarité de ces filtres, le procédé de fabrication comportera une étape d'impression réalisée en plusieurs passes successives, avec superposition ou entrelacement des impacts des gouttes avec une phase de séchage entre chaque passe d'impression.

Le procédé de fabrication selon l'invention peut comporter également une étape initiale d'impression de la grille sombre ("black matrix") 10 par dépôt de jet d'encre continu émis par la tête d'impression 25 (figure 5b). Il peut comporter, de plus, une étape finale d'impression d'une couche de planarisation 11 recouvrant les pavés colorés ainsi imprimés, par une tête d'impression multijet, de grande largeur et à résolution moyenne, qui peut être fixée sur le support mécanique de la tête d'impression haute résolution (figure 5d). Cette tête d'impression multijet qui autorise la couverture totale et uniforme du substrat en un seul ou un nombre limité de balayages peut aussi déposer la couche d'alignement.

L'invention concerne enfin un procédé de réparation de filtres colorés mettant en oeuvre un dispositif de fabrication déjà décrit, que ces filtres soient fabriqués selon le procédé de l'invention ou par des techniques classiques. Ce procédé comporte une première étape d'indication par un opérateur au système de contrôle 35, des opérations d'inspection à réaliser, par exemple spécifiant sur certains groupes de pavés supposés défectueux. Le système à optique microscopique 34, fixé près de la tête d'impression 25, repère les pavés défectueux qui sont alors visualisés sur un écran de contrôle 38 que regarde l'opérateur. Celui-ci, ou tout autre système de reconnaissance d'image couleur peut ensuite reconnaître les caractéristiques des défauts, c'est-à-dire leur couleur, leur position et leur géométrie. L'opérateur définit une séquence de réparation transmise au système de contrôle, qui envoie des commandes d'impression aux modules d'impression. Chaque défaut sera corrigé par dépôt sélectif d'encre émise par une seule buse de la couleur correspondant au pavé défectueux.

Les dispositifs et procédés selon l'invention ne s'appliquent pas uniquement aux filtres colorés pour écrans plats à cristaux liquides, mais également aux systèmes d'acquisition d'images couleurs tels que les caméras électroniques couleurs dans lesquelles le filtre coloré est déposé directement sur l'élément sensible de la caméra. Dans ce cas particulier, le filtre coloré est destiné à tronquer le spectre de couleurs reçu par l'élément sensible de la caméra afin que le signal reçu par chaque pavé soit représentatif d'une seule caractéristique spectrale de la lumière reçue. L'invention présente l'avantage, d'une part, de ne pas générer de défauts lors du dépôt des pavés colorés et de réaliser un contrôle précis lors de ce dépôt, et d'autre part, de ne pas engendrer de perte de matériau puisque les pavés sont obtenus à partir de l'impact de gouttes d'encre émises spécialement. Aussi, le coût de fabrication des filtres colorés est bien inférieur à leur coût actuel et le rendement de fabrication est très élevé. Enfin, la technique du jet d'encre permet la fabrication d'une gamme de tailles d'écran allant de quelques centimètres de diagonale, pour les téléviseurs de poche par exemple, à près de un mètre pour les écrans muraux, sans limitation de principe ou investissements importants.

## Revendications

1. Dispositif de fabrication et de réparation de filtres colorés à partir d'un substrat sur lequel est déposé un réseau régulier de pavés colorés contribuant à modifier la couleur par effet de filtre optique, caractérisé en ce qu'il comporte les éléments suivants:
- une table (23) de grande stabilité mécanique, sur laquelle est placé le substrat (24),
- une tête d'impression (25) par jet d'encre continu haute résolution, comprenant plusieurs modules d'impression (26) à une ou plusieurs buses d'éjection d'encre,
- au moins un circuit d'alimentation (27) en encre de ladite tête d'impression (25),
- un dispositif mécanique (28) motorisé de déplacement relatif du substrat (24) par rapport à la tête d'impression (25), de très haute précision,
- un dispositif de mesure (300) de la position de la table selon deux directions perpendiculaires entre elles, X et Y, et sensiblement perpendiculaires à la direction Z des gouttes projetées par la tête d'impression (25),
- un système de positionnement (34) à optique microscopique, dont la position relative à la tête d'impression selon les deux directions X et Y est fixe, destiné à positionner les impacts des gouttes émises par la tête d'impression par rapport à des repères optiques présents sur le substrat,
- un système de contrôle et de commande (35) de l'ensemble du dispositif, relié à chaque élément dudit dispositif.

2. Dispositif selon la revendication 1, caractérisé en ce que la tête d'impression (25) utilise la technique du jet d'encre continu dévié haute résolution.

3. Dispositif selon la revendication 1, caractérisé en ce que la tête d'impression (25) utilise la technique du jet d'encre continu binaire haute résolution.

4. Dispositif selon la revendication 1, caractérisé en ce que le dispositif de mesure (300) de la position de la table (23) est constitué de circuits d'interférométrie laser.

5. Dispositif selon la revendication 1, caractérisé en ce que le système de positionnement (34) à optique microscopique comporte un système laser autofocus (37) de réglage automatique de la distance focale.

6. Dispositif selon l'une quelconque des revendications 1 à 5, caractérisé en ce qu'il comporte, de plus, une tête d'impression multijet de grande largeur (251), fixée à côté de la tête d'impression haute résolution (25).

7. Dispositif selon la revendication 1, caractérisé en ce que les repères optiques présents sur le substrat (24) correspondent à la grille sombre du filtre qui sert à délimiter les pavés colorés.

8. Dispositif selon la revendication 1, caractérisé en ce qu'il comporte au moins un système de séchage et de réticulation des résines contenues dans l'encre.

9. Dispositif selon la revendication 8, caractérisé en ce que le système de séchage est une plaque chauffante placée sous le substrat du filtre.

10. Dispositif selon la revendication 8, caractérisé en ce que le système de séchage est un système d'émission d'un flux énergétique vers le substrat.

11. Dispositif selon l'une quelconque des revendications 1 à 10, caractérisé en ce qu'il est placé dans une enceinte à atmosphère, température et propreté contrôlées.

12. Procédé de fabrication de filtres colorés mettant en oeuvre un dispositif de fabrication selon l'une quelconque des revendications 1 à 11, caractérisé en ce qu'il comporte les étapes suivantes :
- mémorisation des informations de position, de forme et de couleur concernant les pavés par le système de contrôle (35) puis par les cartes électroniques affectées à chaque module d'impression (26) de la tête d'impression (25),
- mise en place du substrat (24) du filtre, comprenant des repères optiques de positionnement sur la table (23) en-dessous de la tête d'impression (25),
- impression des motifs géométriques tests par la tête d'impression (25) sur le substrat (24),
- lecture des positions respectives des repères de positionnement d'une part, et des motifs tests d'autre part, par le système de positionnement à optique microscopique (34),
- analyse, par le système de contrôle (35), des écarts de position entre les repères de positionnement et les motifs tests et commande du positionnement des impacts de gouttes sur le substrat (24),
- impression à la volée de chaque pavé sur le substrat (24) selon un algorithme de déplacement relatif entre le substrat et la tête d'impression (25).

13. Procédé de fabrication selon la revendication 12, caractérisé en ce que la commande du positionnement des impacts de gouttes sur le substrat (24) consiste en un asservissement de la trajectoire des gouttes d'encre émises par la tête d'impression (25) par action sur leurs tensions de charge, dans le cas du jet d'encre continu dévié.

14. Procédé de fabrication selon la revendication 12, caractérisé en ce que la commande du positionnement des impacts de gouttes sur le substrat (24) consiste en une compensation de la position de la table (2) sur laquelle est placé le substrat (24).

15. Procédé de fabrication selon l'une quelconque des revendications 12 à 14, caractérisé en ce que l'impression des pavés sur le substrat est réalisée selon la direction qui aligne le plus grand nombre de pavés correspondant à une même couleur.

16. Procédé de fabrication selon l'une quelconque des revendications 12 à 15, caractérisé en ce que l'impression des pavés sur le substrat est réalisée selon un mode d'émission des gouttes sur une trajectoire unique et nombre de gouttes variables émises par chaque buse placée au-dessous du centre d'un pavé.

17. Procédé de fabrication selon la revendication 12, caractérisé en ce que l'impression des pavés sur le substrat est réalisée en mode trame, avec plusieurs séquences de gouttes émises selon des trajectoires différentes pour imprimer toute la surface de chaque pavé.

18. Procédé de fabrication selon l'une quelconque des revendications 12 à 17, caractérisé en ce qu'il comporte une étape initiale d'impression de la grille sombre (10) sur le substrat (24) par la tête d'impression (25).

19. Procédé de fabrication selon l'une quelconque des revendications 12 à 18, caractérisé en ce qu'il comporte une étape finale d'impression d'une couche de planarisation (11) et/ou d'alignement (15) par la tête d'impression multijet à résolution moyenne.

20. Procédé de fabrication selon l'une quelconque des revendications 12 à 17, caractérisé en ce que l'étape d'impression comporte plusieurs passes successives de la tête d'impression (25) sur le substrat (24), avec superposition ou entrelacement des impacts de gouttes et avec phase de séchage entre chaque passe d'impression.

21. Procédé de réparation de filtres colorés mettant en oeuvre un dispositif de fabrication selon l'une quelconque des revendications 1 à 11, caractérisé en ce qu'il comporte les étapes suivantes :
- indication, par un opérateur, au système de contrôle (35) des opérations d'inspection à réaliser sur le substrat (24),
- repérage des pavés défectueux par le système de positionnement à optique microscopique (34),
- visualisation sur un écran de contrôle desdits pavés défectueux,
- reconnaissance des caractéristiques des défauts par l'opérateur ou tout système automatique de reconnaissance d'image couleur,
- définition d'une séquence de réparation transmise au système de contrôle (35),
- impression par dépôt sélectif d'encre émise par une seule buse de la couleur correspondant aux pavés défectueux.

## Patentansprüche

1. Vorrichtung zur Herstellung und Reparatur von Farbfiltern auf einem Substrat, auf das ein gleichmäßiges Gitter aus farbigen Quadern aufgebracht wird bzw. ist, die, als optische Filter wirkend, die Farbe verändern,
**dadurch gekennzeichnet**, daß sie die folgenden Elemente umfaßt:
- einen Tisch (23) mit großer mechanischer Stabilität, auf dem das Substrat (24) angeordnet wird,
- einen kontinuierlich arbeitenden Hochauflösungs-Tintenstrahldruckkopf (25), mehrere Druckmodule (26) mit einem oder mehreren Tintenspritzdüsen umfassend,
- wenigstens einen Kreis bzw. ein System (27) zur Versorgung des Druckkopfs (25) mit Tinte,
- eine motorisierte mechanische Relativverschiebungseinrichtung (28) des Substrats (24) bezüglich des Druckkopfs (25) mit sehr hoher Genauigkeit,
- eine Meßeinrichtung (300) der Position des Tisches in zwei zueinander senkrechten Richtungen X und Y, im wesentlichen senkrecht zu der Richtung Z der durch den Druckkopf (25) gespritzten Tröpfchen,
- ein Positionierungssystem (34) mit mikroskopischer Optik, dessen Stellung bezüglich des Druckkopfs in den beiden Richtungen X und Y feststehend ist und das dazu bestimmt ist, die Auftreffpunkte der durch den Druckkopf ausgestrahlten Tröpfchen zu positionieren bezüglich Bezugspunkten bzw. -systemen, die auf dem Substrat vorhanden sind,
- ein Kontroll- und Steuersystem (35) der gesamten Vorrichtung, verbunden mit jedem Element dieser Vorrichtung.

2. Vorrichtung nach Anspruch 1, dadurch gekennzeichnet, daß der Druckkopf (25) die Technik des abgelenkten kontinuierlichen Tintenstrahls mit hoher Auflösung benutzt.

3. Vorrichtung nach Anspruch 1, dadurch gekennzeichnet, daß der Druckkopf (25) die Technik des binären kontinuierlichen Tintenstrahls mit hoher Auflösung benutzt.

4. Vorrichtung nach Anspruch 1, dadurch gekennzeichnet, daß die Meßeinrichtung (300) der Position des Tisches (23) durch Laser-Interferometerschaltungen gebildet werden.

5. Vorrichtung nach Anspruch 1, dadurch gekennzeichnet, daß das Positionierungssystem (34) mit mikroskopischer Optik ein selbstfokussierendes Lasersystem (37) mit automatischer Regelung der Fokaldistanz umfaßt.

6. Vorrichtung nach einem der Ansprüche 1 bis 5, dadurch gekennzeichnet, daß es zudem einen Multijet-Druckkopf (251) großer Breite umfaßt, angebracht neben dem Hochauflösungsdruckkopf (25).

7. Vorrichtung nach Anspruch 1, dadurch gekennzeichnet, daß die auf dem Substrat (24) vorhandenen optischen Bezugspunkte bzw. -systeme dem dunklen Gitter des Filters entsprechen, das dazu dient, die farbigen Quader zu begrenzen.

8. Vorrichtung nach Anspruch 1, dadurch gekennzeichnet, daß sie wenigstens ein Trocknungs- und Vernetzungssystem der in der Tinte enthaltenen Harze umfaßt.

9. Vorrichtung nach Anspruch 8, dadurch gekennzeichnet, daß das Trocknungssystem eine unter dem Substrat des Filters angeordnete Heizplatte ist.

10. Vorrichtung nach Anspruch 8, dadurch gekennzeichnet, daß das Trocknungssystem ein Emissionssystem eines Strahlungsflusses in Richtung Substrat ist.

11. Vorrichtung nach einem der Ansprüche 1 bis 10, dadurch gekennzeichnet, daß sie in einem Rezipienten mit kontrollierter Atmosphäre, Temperatur und Reinheit untergebracht ist.

12. Verfahren zur Herstellung von Farbfiltern, bei dem eine Herstellungsvorrichtung nach einem der Ansprüche 1 bis 11 verwendet wird,
**dadurch gekennzeichnet**, daß es die folgenden Schritte umfaßt:
- Speichern der die Quader betreffenden Lage-, Form- und Farbinformation durch das Steuerungssystem (35) und dann durch die jedem Druckmodul (26) des Druckkopfs (25) zugeordneten elektronischen Karten,
- Anbringen des die optischen Positionierungsbezugspunkte bzw.-systeme umfassenden Substrats (24) des Filters auf dem Tisch (23) unterhalb des Druckkopfs (25),
- Drucken der geometrischen Testmuster durch den Druckkopf (25) auf dem Substrat (24),
- Lesen der jeweiligen Positionen der Positionierungsbezugspunkte bzw. -systeme einerseits und der Testmuster andererseits durch das Positionierungssystem (34) mit mikroskopischer Optik,
- Analysieren der Abstände zwischen den Positionierungsbezugspunkten bzw. -systemen und den Testmustern und Steuern der Positionierung der Tröpfchen-Auftreffpunkte auf dem Substrat (24),
- fliegendes Drucken jedes Quaders auf dem Substrat (24) nach einem Relativverschiebungsalgorithmus zwischen dem Substrat und dem Druckkopf (25).

13. Herstellungsverfahren nach Anspruch 12, dadurch gekennzeichnet, daß die Steuerung der Positionierung der Tröpfchen-Auftreffpunkte auf dem Substrat (24) im Falle des abgelenkten kontinuierlichen Tintenstrahls in einer Steuerung der Flugbahn der durch dem Druckkopf (25) ausgestrahlten Tintentröpfchen besteht, durch Einwirkung auf ihre Ladungsspannungen.

14. Herstellungsverfahren nach Anspruch 12, dadurch gekennzeichnet, daß die Steuerung der Positionierung der Tröpfchen-Auftreffpunkte auf dem Substrat (24) in einer Kompensierung der Position des Tisches (2) besteht, auf dem das Substrat (24) angeordnet ist.

15. Herstellungsverfahren nach einem der Ansprüche 12 bis 14, dadurch gekennzeichnet, daß das Drucken der Quader auf dem Substrat in der Richtung durchgeführt wird, in der die größte Anzahl von Quadern mit derselben Farbe fluchtet.

16. Herstellungsverfahren nach einem der Ansprüche 12 bis 15, dadurch gekennzeichnet, daß das Drucken der Quader auf dem Substrat durchgeführt wird entsprechend einem Strahlungsmodus von Tröpfchen auf einer einzigen Flugbahn und einer durch jede über der Mitte eines Quaders angeordneten Düse ausgestrahlten variablen Tröpfchenzahl.

17. Herstellungsverfahren nach Anspruch 12, dadurch gekennzeichnet, daß das Drucken der Quader auf dem Substrat im Rastermodus durchgeführt wird, mit mehreren Tröpfchensequenzen, ausgestrahlt entsprechend unterschiedlichen Flugbahnen, um die gesamte Fläche jedes Quaders zu bedrucken.

18. Herstellungsverfahren nach einem der Ansprüche 12 bis 17, dadurch gekennzeichnet, daß es einen Anfangsschritt umfaßt, darin bestehend, mittels des Druckkopfs (25) das dunkle Gitter (10) auf das Substrat (24) zu drucken.

19. Herstellungsverfahren nach einem der Ansprüche 12 bis 18, dadurch gekennzeichnet, daß es einen Endschritt umfaßt, darin bestehend, mittels des Multijet-Druckkopfes mit mittlerer Auflösung eine Planarisationsschicht (11) und/oder eine Ausrichtungsschicht (15) zu drucken.

20. Herstellungsverfahren nach einem der Ansprüche 12 bis 17, dadurch gekennzeichnet, daß der Druckschritt mehrere aufeinanderfolgende Durchläufe des Druckkopfes (25) über dem Substrat (24) umfaßt, mit Überlagerung oder Verschachtelung der Tröpfchen-Auftreffpunkte und mit Trocknungsphase zwischen jedem Druck-Durchlauf.

21. Reparaturverfahren von Farbfiltern mit Anwendung einer Herstellungsvorrichtung nach einem der Ansprüche 1 bis 11,
**dadurch gekennzeichnet**, daß es die folgenden Schritte umfaßt:
- Eingabe durch einen Operator der auf dem Substrat (24) durchzuführenden Inspektionsoperationen in das Steuerungssystem (35),
- Ortung der fehlerhaften Quader durch das Positionierungssystem mit mikroskopischer Optik (34),
- Anzeige der fehlerhaften Quader auf einem Kontrollbildschirm,
- Erkennung der Charakteristika der Fehler durch den Operator oder irgendein automatisches Farbbild-Erkennungssystem,
- Definition einer an das Steuerungssystem (35) übertragenen Reparatursequenz,
- Druck durch selektives Aufbringen von Tinte mit der dem fehlerhaften Quader entsprechenden Farbe, ausgestrahlt durch eine einzige Düse.

## Claims

1. Apparatus for the production and repair of colour filters from a substrate on which is deposited a regular network of coloured blocks contributing to the modification of the colour by optical effect, characterized in that it comprises the following elements:
- a very mechanically stable table (23) on which is placed the substrate (24),
- a high resolution, continuous, ink jet printing head (25) having several printing modules (26) with one or more ink ejection nozzles,
- at least one circuit (27) for supplying ink to said printing head (25),
- a mechanical, motor-driven device (28) for the relative displacement of the substrate (24) with respect to the printing head (25) with very high precision,
- a device (300) for measuring the position of the table in two directions perpendicular to one another (X and Y) and substantially perpendicular to the direction (Z) of the droplets ejected by the printing head (25),
- a positioning system (34) with microscopic optics, whose position relative to the printing head in two directions X and Y is fixed and intended for the positioning of the impacts of the droplets ejected by the printing head relative to optical marks on the substrate,
- a checking and control system (35) for the complete apparatus, connected to each element of said apparatus.

2. Apparatus according to claim 1, characterized in that the printing head (25) uses the high resolution, deflected, continuous ink jet method.

3. Apparatus according to claim 1, characterized in that the printing head (25) uses the high resolution, binary, continuous ink jet method.

4. Apparatus according to claim 1, characterized in that the device (300) for measuring the position of the table (23) is constituted by laser interferometry circuits.

5. Apparatus according to claim 1, characterized in that the microscopic optics positioning system (34) incorporates an autofocus laser system (37) for the automatic setting of the focal distance.

6. Apparatus according to any one of the claims 1 to 5, characterized in that it also comprises a very wide, multijet printing head (251) fixed to the side of the high resolution printing head (25).

7. Apparatus according to claim 1, characterized in that the optical marks present on the substrate (24) correspond to the black matrix of the filter used for defining the coloured blocks.

8. Apparatus according to claim 1, characterized in that it incorporates at least one system for drying and crosslinking resins contained in the ink.

9. Apparatus according to claim 8, characterized in that the drying system is a heating plate placed beneath the substrate of the filter.

10. Apparatus according to claim 8, characterized in that the drying system is a system for emitting a high-energy flux towards the substrate.

11. Apparatus according to any one of the claims 1 to 10, characterized in that it is placed in an enclosure having a controlled atmosphere, temperature and cleanness.

12. Process for the production of colour filters using a production apparatus according to any one of the claims 1 to 11, characterized in that it involves the following stages:
- storing the position, shape and colour informations concerning the blocks by the checking system (35) and then by electronic cards allocated to each printing module (26) of the printing head (25),
- putting into place of the filter substrate (24), including optical positioning marks on the table (23) below the printing head (25),
- printing test geometrical patterns by the printing head (25) on the substrate (24),
- reading the respective positions of the positioning marks on the one hand and test patterns on the other by the microscopic optics positioning system (34),
- analysis, by the checking system (35), of the positional variations between the positioning marks and the test patterns and controlling the positioning of the drop impacts on the substrate (24),
- printing on-the-fly of each block on the substrate (24) in accordance with a relative displacement algorithm between the substrate and the printing head (25).

13. Production process according to claim 12, characterized in that the control of the positioning of the ink drops on the substrate (24) consists of a control of the trajectory of the ink drops ejected by the printing head (25) by action on their charging voltages, in the case of the deflected, continuous ink jet.

14. Production process according to claim 12, characterized in that the control of the positioning of the drop impacts on the substrate (24) consists of a compensation of the position of the table (2) on which is placed the substrate (24).

15. Production process according to any one of the claims 12 to 14, characterized in that the printing of the blocks on the substrate takes place in the direction aligning the greatest number of blocks corresponding to the same colour.

16. Production process according to any one of the claims 12 to 15, characterized in that the printing of the blocks on the substrate takes place by ejecting droplets on a single trajectory and a variable number of drops ejected by each nozzle placed below the centre of a block.

17. Production process according to claim 12, characterized in that the printing of the blocks on the substrate takes place in the frame or screen mode, with several sequences of drops ejected in accordance with different trajectories in order to print the entire surface of each block.

18. Production process according to any one of the claims 12 to 17, characterized in that it involves an initial stage of printing the black matrix (10) on the substrate (24) by the printing head (25).

19. Production process according to any one of the claims 12 to 18, characterized in that it involves a final stage of printing a planarization (11) and/or alignment (15) layer by the medium resolution, multijet printing head.

20. Production process according to any one of the claims 12 to 17, characterized in that the printing stage involves several successive passes of the printing head (25) on the substrate (24), with the superimposing or interleaving of drop impacts and with a drying phase between each printing pass.

21. Process for the repair of colour filters using the production apparatus according to any one of the claims 1 to 11, characterized in that it involves the following stages:
- indication by an operator to the checking system (35) of the inspection operations to be carried out on the substrate (24),
- marking of defective blocks by the microscopic optics positioning system (34),
- display on a checking screen of said defective blocks,
- recognition of the characteristics of the defects by the operator or any other colour image recognition system,
- definition of a repair sequence transmitted to the checking system (35),
- printing by selective deposition of ink ejected by a single nozzle having the colour corresponding to the defective blocks.
